# EUROPÄISCHE PATENTSCHRIFT

(11) **EP 2 321 037 B1**
(45) Veröffentlichungstag und Bekanntmachung des Hinweises auf die Patenterteilung: **04.10.2017**
(21) Anmeldenummer: 09777499.6
(22) Anmeldetag: 29.07.2009
(51) Int. Cl.: B01D 63/10, B01D 63/12

(54) **FILTERMODUL UND SYSTEM MIT SPIRALFÖRMIG GEWICKELTEN MEMBRANFILTERN**
FILTER MODULE AND SYSTEM WITH SPIRALLY WOUND MEMBRANE FILTERS
MODULE ET SYSTEME AVEC DES MEMBRANES ENROULÉ EN SPIRALE

(30) Priorität: 04.08.2008 DE 102008036098
(43) Veröffentlichungstag der Anmeldung: 18.05.2011
(73) Patentinhaber: Microdyn-Nadir GmbH, 65203 Wiesbaden (DE)
(72) Erfinder: MEYER-BLUMENROTH, Ulrich, 65510 Idstein-Wörsdorf (DE); VOIGT, Reinhard, 99867 Gotha (DE)
(74) Vertreter: Plate, Jürgen
(86) Internationale Anmeldenummer: PCT/EP2009/005471
(87) Internationale Veröffentlichungsnummer: WO 2010/015345

(56) Entgegenhaltungen:
- EP-A1- 1 625 885
- EP-A2- 0 251 620
- EP-A2- 0 443 642
- EP-A2- 0 925 825
- JP-A- 8 196 876
- US-A- 4 802 982
- US-B1- 6 168 648

## Beschreibung

Die vorliegende Erfindung betrifft ein Filtermodul mit spiralförmig gewickelten Flachfilterelementen und ein aus den Filtermodulen aufgebautes Filtrationssystem.

Filter mit spiralförmiger Wicklung sind im Stand der Technik bekannt. DE 2 213 165 offenbart einen derartigen Filter, bei dem die Filterpatrone aus einem spiralförmig aufgewickelten Mehrlagentuch mit zwei entgegengesetzten spiralförmigen Endflächen besteht. Die das Tuch bildenden Lagen sind derart abgedichtet, dass das in die Filterpatrone durch eine spiralförmige Endfläche eintretende Fluid durch mindestens eine Filterfläche strömen muss, bevor es die Filterpatrone wieder verlassen kann. Jede Filterlage befindet sich zwischen zwei dünnen Abstandslagen mit hohem Porenvolumen. Gegen die Fläche einer der Abstandslagen ist mindestens eine fluidundurchlässige Lage gelegt. Durch Verwendung einer dünnen Abstandslage wird eine kompakte Filterpatrone mit großer aktiver Filterfläche pro Volumeneinheit erhalten. Die US 5,304,312 beschreibt eine versiegelte Filtereinheit mit erster und zweiter stirnseitiger Endkappe, wobei die Endkappen Verbinder zum Anschluss von Leitungen für eine zu filternde Rohflüssigkeit und ein hieraus gefiltertes Permeat aufweisen. Die Filtereinheit beinhaltet ein zwischen den Endkappen angeordnetes Filterelement aus einem spiralförmig gewickelten zweilagigen Filterverbundmaterial, das eine Filterlage und eine flüssigkeits-undurchlässige Abstandslage umfasst. An den beiden gegenüberliegenden Stirnseiten des spiralförmig gewickelten Filterverbundmaterials sind die Ränder der Filterlage jeweils mit der links und rechts benachbarten Abstandslage flüssigkeitsdicht verbunden. Dieser Aufbau gewährleistet, dass die über die erste Endkappe zugeführte Rohflüssigkeit einmal die Filterlage permeieren muss, um als Permeat an der zweiten Endkappe abgeführt zu werden.

EP 1 256 372 A2 lehrt ein Filtermodul, das eine spiralförmig um ein perforiertes Rohr gewickelte Kapillarfiltermatte umfasst. Durch das perforierte Rohr wird ein zu filterndes Rohfluid zugeführt und mit der spiralförmig gewickelten Kapillarfiltermatte in Kontakt gebracht. Mittels eines Druckdifferentials zwischen der Innen - und Außenseite der Kapillarfilter wird aus dem Rohfluid ein Permeat gefiltert und aus dem Inneren der Kapillarfilter abgeführt. Ein Zugang zum Inneren der Kapillarfilter wird geschaffen, indem die beiden Stirnseiten der spiralförmig gewickelten Kapillarfiltermatte mit Endkappen aus einem gießfähigen härtbaren Material versehen und die erhaltenen Endkappen im wesentlichen senkrecht zur Längsachse der Kapillarfilter abgeschnitten werden.

Die im Stand der Technik bekannten Filter mit spiralförmig gewickelten, mehrlagigen Flachfilterelementen oder Kapillarfiltermatten weisen einen oder mehrere der nachfolgend genannten Nachteile auf:
- zur Trennung von Rohflüssigkeit und Permeat wird eine flüssigkeits-undurchlässige Lage bzw. Schicht benötigt, die das Volumen des Filters vergrößert, ohne zur aktiven Filtrationsfläche beizutragen;
- die einzelnen Lagen der Flachfilterelemente sind lediglich randseitig miteinander verbunden, so dass sie eine geringe mechanische Stabilität aufweisen;
- aufgrund der geringen mechanischen Stabilität sind die Flachfilterelemente während der Herstellung und insbesondere beim Wickeln zu einer Spirale anfällig für die Bildung von Falten und Verwerfungen, so dass die entsprechenden Herstellungsverfahren auf geringe Längen der Filterlagen beschränkt sind.

EP 0 251 620 A2 beschreibt ein Spiralfiltermodul mit radialem Strömungsweg des zu filternden Rohfluids. Ein von zwei Filtrationsmembranen umgebener Permeatspacer sowie ein Feedspacer sind an einem porösen Kernrohr befestigt und spiralförmig um dieses herum gewickelt. Durch das poröse Kernrohr wird ein zu filterndes Rohfluid in das Spiralfiltermodul geleitet und durch den Feedspacer entlang der spiralförmig gewundenen Oberfläche der Filtrationsmembranen zur Außenseite des Spiralfiltermoduls geführt. Durch die Filtrationsmembranen tritt Permeat bzw. Filtrat in den von den beiden Filtrationsmembranen begrenzten Permeatraum. Das poröse Kernrohr ist an einer ersten Stirnseite des Spiralfiltermoduls offen und an einer zweiten Stirnseite fluiddicht verschlossen. Der Permeatraum ist an der ersten Stirnseite fluiddicht versiegelt und an der zweiten Stirnseite mit einer Ableitung verbunden, über die Filtrat bzw. Permeat abgeführt wird.

JP 08 196 876 A betrifft ein Spiralfiltermodul mit einem zentral angeordneten, perforierten Permeatsammelrohr und einem von zwei Filtrationsmembranen begrenzten, spiralförmig gewickelten Filterelement. Ein zu filterndes Rohfluid wird an einer äußeren Mantelfäche des Spiralfiltermoduls zugeführt und strömt zwischen den äußeren Oberflächen der spiralförmig gewundenen Filtrationsmembranen nach innen. Ein von den Filtrationsmembranen begrenzter Permeatraum ist fluidisch mit dem Innenraum des Permeatsammelrohrs verbunden. Hierzu ist ein in Längsrichtung des Spiralfiltermoduls verlaufender Rand des Filterelements fluiddicht mit dem Permeatsammelrohr gekoppelt. Die stirnseitigen Ränder des Filterelements sind mit einem Kleber versiegelt.

US 4,802,982 offenbart ein Spiralfiltermodul mit einem zentral angeordneten Permeatsammelrohr und einem spiralförmig gewickelten Filterelement. Das Filterelement umfasst zwei Filtrationsmembranen und einen zwischenliegenden Permeatspacer, wobei die Filtrationsmembranen mit dem Permeatspacer flächenhaft mechanisch gekoppelt, insbesondere laminiert sind. Die Erfindung hat die Aufgabe die oben genannten Nachteile zu überwinden und ein Filtermodul mit spiralförmiger Wicklung bereitzustellen, das hohe Druckbeständigkeit und große Flächen der einzelnen Filterlagen aufweist, das rückspülbar ist und sich für den Einsatz in kommerziellen Filtrationssystemen eignet.

Diese Aufgabe wird gelöst durch ein Filtermodul wie in Anspruch 1 definiert. Weitere bevorzugte Ausführungsformen des erfindungsgemäßen Filtermoduls sind in den Ansprüchen 2-11 wiedergegeben.

Im Folgenden wird die Erfindung anhand von Figuren näher erläutert. Es zeigen in schematischer Darstellung:
- Fig. 1a-b: ein Filtermodul mit einem Flachfilterelement und einer Stirnwand in perspektivischer Voll- und Schnittansicht;
- Fig. 2a-c: Schnittansichten von Filtermodulen mit zwei Stirnwänden;
- Fig. 3a-c: Querschnitte durch Filtermodule mit spiralförmig gewickelten Flachfilterelementen mit zwischenliegenden Abstandshaltern;
- Fig. 4a-b: perspektivische Schnittansichten eines Filtermoduls mit zwei Stirnwänden und einem Gehäuse;
- Fig. 5a-b: Schnittansichten von zwei Filtrationssystemen mit jeweils drei in Reihe angeordneten Filtermodulen;
- Fig. 6a-b: detaillierte Schnittansichten zweier benachbarter Filtermodulen, die mittels einer Kupplung verbunden sind; und
- Fig. 7: eine Kupplung zur Verbindung zweier Filtermodule in perspektivischer Explosionsdarstellung.

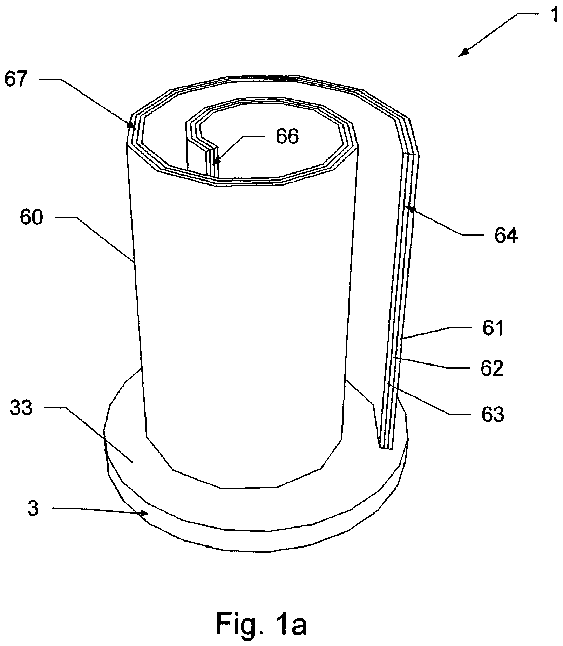

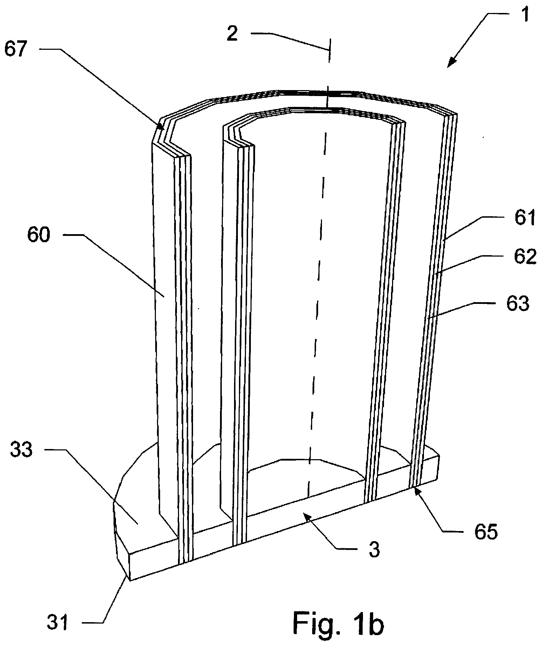

Fig. 1a und b zeigen ein erfindungsgemäßes Filtermodul 1 mit einem spiralförmig gewickelten Flachfilterelement 60 und einer Stirnwand 3. Das Flachfilterelement 60 umfasst zwei Filtermembranen (61, 63) und eine zwischenliegende Drainagelage 62. Vorzugsweise sind die Filtermembranen (61, 63) jeweils mit einer der beiden Seite der Drainagelage 62 laminiert. Insbesondere werden die Flachfilterlemente 60 aus einem bandförmigen, vorzugsweise flexiblen Filterverbundmaterial gefertigt, welches in einem quasi-kontinuierlich betriebenen Laminator aus zwei bandförmigen Filtermembranen und einer bandförmigen Drainagelage mittels Flüssigkleber oder festen bandförmigen Klebemitteln, wie Klebenetzen oder Klebefolien laminiert wird. Zur Herstellung des bandförmigen Filterverbundmaterials werden z.B. eine erste bandförmige Filtermembran, ein erstes bandförmiges Klebenetz aus thermoplastischem Polymer, eine bandförmige Drainagelage, ein zweites bandförmiges Klebenetz aus thermoplastischem Polymer und eine zweite bandförmige Filtermembran jeweils von einer separaten Vorratsrolle zugeführt und in einen Druckwalzenpaar zu einem bandförmigen Stapel zusammengeführt, der bandförmige Stapel in einem beheizten Walzenpaar an seiner Ober- und Unterseite erwärmt und anschließend abgekühlt, derart dass das erste und zweite Klebenetz aufschmelzen und anschließend abkühlen, wodurch die Drainagelage dauerhaft klebend mit den Filtermembranen verbunden wird.

Die Drainagelage besteht aus einem polymeren, anorganischen oder metallischen Bandmaterial, welches eine offene Struktur zur Durchleitung von Fluiden aufweist. Vorzugsweise handelt es sich bei dem Material der Drainagelage um ein Gitter oder ein Abstandsgewirke aus Kunststoff. Im Stand der Technik bekannte Abstandsgewirke bestehen aus einer ersten und zweiten flächigen Maschenkonstruktion und einem zwischen erster und zweiter Maschenkonstruktion angeordneten Polfadensystem aus Polfäden. Die Polfäden sind räumlich regelmäßig zueinander und in Ketten- oder Schussrichtung der Maschenkonstruktionen angeordnet, wobei jeder Polfaden abwechselnd durch Maschen der ersten und zweiten Maschenkonstruktion derart geführt ist, dass der Polfaden einen sägezahn- oder spiralförmigen Verlauf aufweist.

Die Filtermembran ist ein oder mehrschichtig, vorzugsweise zweischichtig aufgebaut. Gebräuchliche zweischichtige Filtermembranen bestehen aus einem Trägervlies und einer porösen Membranschicht. Bei der Herstellung von Filterverbundmaterial wird das Trägervlies mit der Drainagelage verbunden bzw. laminiert, so dass die poröse Membranschicht an der Au-ßenseite des Filterverbundmaterials angeordnet ist. Die poröse Membranschicht ist durch Nassfällung oder Laminierung mit dem Trägervlies verbunden. Bei der Nassfällung wird die poröse Membranschicht auf dem Trägervlies abgeschieden, ansonsten auf das Trägervlies auflaminiert. Vorzugsweise besteht die poröse Membranschicht aus Polyethersulfon, Polysulfon, Polyacrylnitril, Polyvinylidenfluorid, Polyamid, Polyetherimid, Celluloseacetat, Regeneratcellulose, Polyolefin oder Fluorpolymer. Die poröse Membranschicht wird beispielsweise erzeugt, indem ein Vlies oder Gewebe mit Polymerlösung beschichtet und das Polymer in einem nachfolgenden Phaseninversionsschritt ausgefällt wird. Alternativ hierzu wird eine Polymerfolie in geeigneter Weise verstreckt, wobei in der Polymerfolie Poren entstehen. Die verstreckte Polymerfolie wird dann zur mechanischen Stabilisierung auf ein Trägervlies auflaminiert. Nach diesen Methoden hergestellte Filtermembranen sind kommerziell erhältlich, z.B. unter der Bezeichnung NADIR® Membranen (MICRODYN-NADIR GmbH, Wiesbaden) oder Celgard® Flat Sheet Membranes (Celgard Inc., Charlotte, NC, USA).

Zur Herstellung von Flachfilterelementen 60 werden z.B. aus einem Filterverbundmaterial der voranstehend beschriebenen Art Filterzuschnitte mit geeigneter, vorzugsweise rechteckiger Form ausgeschnitten. Die erhaltenen Filterzuschnitte werden randseitig fluiddicht versiegelt mittels bekannter Methoden, wie z.B.
- Verbinden der Drainagelage mit den Filtermembranen durch thermisches oder Ultraschall-Schweißen;
- Kleben, wobei in einem Randbereich des Filterzuschnitts ein Flüssigkleber zwischen der Drainagelage und den Filtermembranen eingetragen und gehärtet bzw. vernetzt wird;
- Tauchkleben, wobei ein Randbereich des Filterzuschnitts an Ober- und Unterseite sowie an der Schnittfläche bzw. Stoßkante mit einem Kleber beaufschlagt wird;
- maschinelles Vernähen mit einem Faden; oder
- durch eine mechanische Klemmvorrichtung.

Hierbei werden mindestens zwei einander gegenüberliegende Randbereiche, bevorzugt drei oder vier Randbereiche der Filterzuschnitte über ihre Gesamtlänge fluiddicht versiegelt.

Die somit erhaltenen, vorzugsweise rechteckigen Flachfilterelemente 60 weisen einen ersten und zweiten, fluiddicht versiegelten Randbereich (64, 66) und einen dritten und vierten offenen (d.h. unversiegelten) oder versiegelten Randbereich (65, 67) auf.

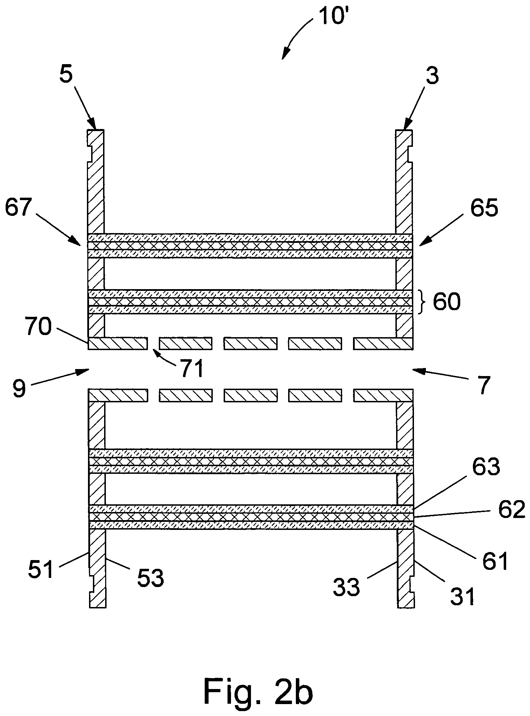

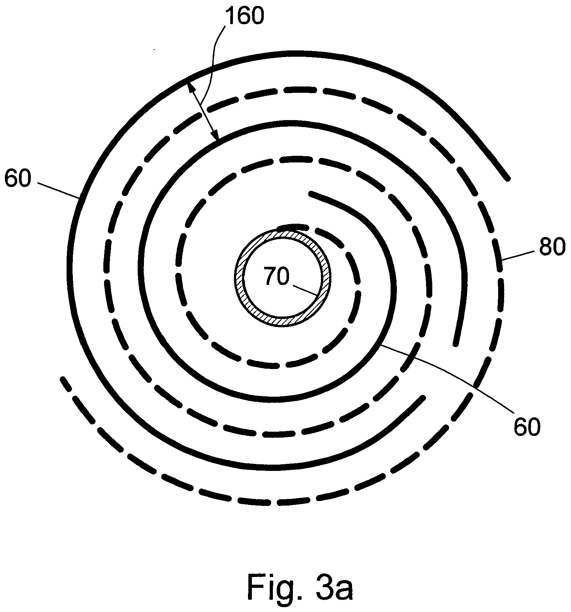

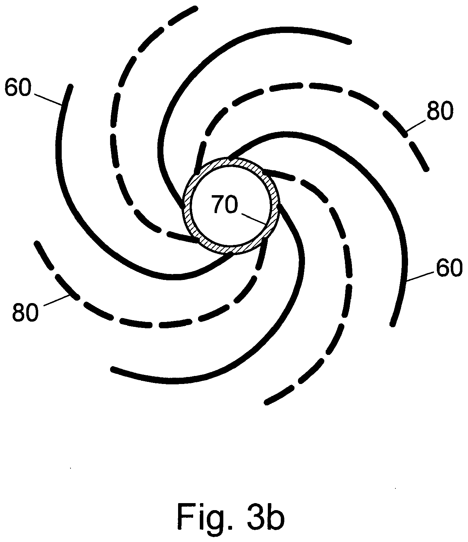

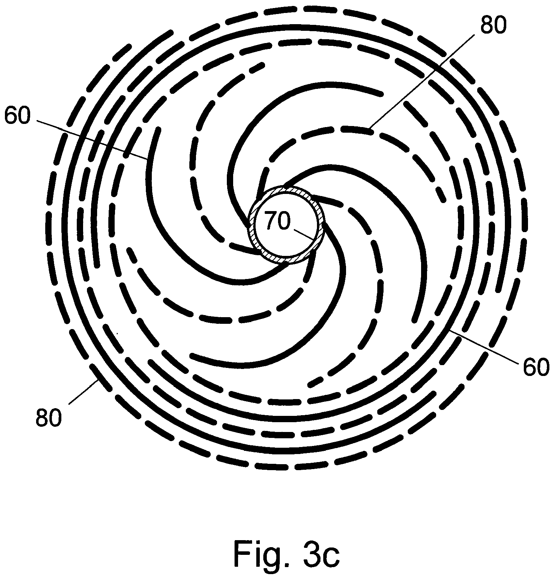

Ein oder mehrere aufeinander gestapelte Flachfilterelemente 60 werden zu einem zylindrischen Spiralkörper gewickelt und durch geeignete mechanische Haltevorrichtungen, wie z.B. Bänder oder Ringe in dieser Form fixiert. Vorzugsweise werden die Flachfilterelemente 60 um ein Verteilerrohr 70 (s. Fig. 2b) gewickelt. In Weiterbildung der Erfindung werden dem ein- oder mehrlagigen Stapel aus Flachfilterlementen 60 vor dem Wickeln des Spiralkörpers ein oder mehrere flächenhaft ausgebildete, durchströmbare Abstandselemente 80 hinzugefügt (s. Fig. 3) Bei diesen Abstandselementen 80 handelt es sich z.B. um grobmaschige Gitter oder Netze aus Kunststoff. Vorzugsweise wird zwischen zwei Flachfilterelementen 60 jeweils ein Abstandselement 80 eingefügt.

Der mittels Haltevorrichtungen fixierte Spiralkörper mit dem optionalen Verteilerrohr 70 wird mit einer ersten Stirnwand 3 versehen, indem er stirnseitig mit einem verflüssigten härtbaren Material vergossen und anschließend das Material ausgehärtet wird, wobei die erste Stirnwand 3 die dritten Ränder 65 fluiddicht umschliesst. Zur Herstellung der ersten Stirnwand 3 wird z.B. eine Gießform mit rechteckigem oder kreisförmigem Innenquerschnitt und planem Boden bis zu einer vorbestimmten Höhe mit Epoxydharz gefüllt. Zur Verstärkung der Stirnwand 3 ist es zweckmäßig, dem Epoxydharz Glas- oder Carbonfasern beizumengen. Hieran anschließend wird der Spiralkörper relativ zur Gießform so ausgerichtet, dass der erste Randbereich 65 vollständig in das Epoxydharz eintaucht. Das Epoxydharz wird dann thermisch oder mittels UV-Licht zu einer Vorform ausgehärtet, welche den ersten Randbereich 65 fluiddicht einschließt. Die Vorform wird aus der Gießform entnommen und mittels Säge-, Fräs-, Dreh- oder Schleifmaschinen mechanisch bearbeitet, um der ersten Stirnwand 3 eine genau definierte Endform zu verleihen und um den Randbereich 65 an der Außenseite 31 der Stirnwand 3 freizulegen und zu öffnen, so dass ein durchströmbarer Zugang zum Inneren des Flachfilterlements 60 d.h. zur Drainagelage 62 entsteht.

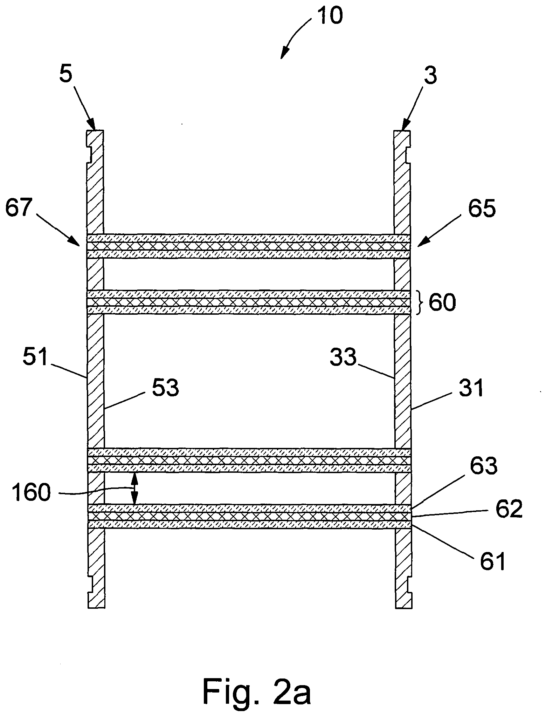

Die Flachfilterelemente 60 sind aufgrund ihres dreilagigen Aufbaus aus zwei Filtermembranen (61, 63) und der zwischenliegenden Drainagelage 62 robust und widerstehen einem transmembranen Differentialdruck zwischen der Außenseite der Filtermembranen (61, 63) und der Drainagelage 62 von größer 2 bar, bevorzugt größer 10 bar, und besonders bevorzugt größer 20 bar ohne mechanische Beschädigung oder Leckbildung. Erfindungsgemäß haben die Flachfilterelemente 60 in Richtung der Achse 2 eine Länge von 0,1 bis 6,0 m, bevorzugt von 0,4 bis 4,0 m, und besonders bevorzugt von 0,6 bis 2,5 m. Der mit den spiralförmig gewickelten Flachfilterelementen 60 ausgefüllte Raumbereich hat, bezogen auf die Achse 2 als Mittelachse des spiralförmigen Wickels, eine radiale Abmessung von 0,05 bis 1,5 m, bevorzugt von 0,1 bis 1,25 m, und besonders bevorzugt von 0,2 bis 0,8 m. Hierbei beträgt der (in Fig. 2a und 3a mit dem Bezugszeichen 160 bezeichnete) radiale Abstand zwischen der Außenseite der spiralförmig gewickelten Flachfilterelemente 60 und der hierzu benachbarten Innenseite derselben oder weiterer Flachfilterelemente 60 0,1 bis 20 mm, bevorzugt 0,3 bis 8 mm, und besonders bevorzugt 0,5 bis 3 mm. Das mit den voranstehend genannten Abmessungen spiralförmig gewickelte Filtermodul 1 weist eine aktive Filtrationsfläche pro Filtermodul von größer 50 m², bevorzugt größer 250 m², und besonders bevorzugt von größer 1000 m² auf.

In Weiterbildung der Erfindung wird das in Fig. 1a und 1b gezeigte Filtermodul 1 mit einer zweiten Stirnwand 5 ausgestattet, wobei die zweite Stirnwand 5 in der gleichen Weise wie die erste Stirnwand 3 z.B. durch Vergießen mit einem verflüssigten härtbaren Material angefertigt wird. Fig. 2a zeigt eine schematische Schnittansicht durch ein derartiges Filtermodul 10 mit erster und zweiter Stirnwand (3, 5). Die erste Stirnwand 3 weist eine Innenseite 33 und eine Außenseite 31 auf, wobei die Innenseite 33 den Flachfilterelementen 60 zugewandt ist. Analog hierzu weist die zweite Stirnwand 5 eine Innenseite 53 und eine Außenseite 51 auf. Der dritte und vierte Randbereich (65, 67) der Flachfiltermodule 60 sind auf den jeweiligen Au-ßenseiten (31, 51) offen und gegenüber den Innenseiten (33, 53) fluiddicht getrennt. Die in den Stirnseiten (3, 5) angeordneten und an den Außenseiten (31, 51) offenen dritten und vierten Randbereiche (65, 67) verbinden das Innere der Flachfilterelemente 60, d.h. die Drainagelage 62 mit zwei an den Außenseiten (31, 51) an das Filtermodul 1 von außen angrenzenden Halbräumen. Der radiale Abstand zwischen der Außenseite der spiralförmig gewickelten Flachfilterelemente 60 und der hierzu benachbarten Innenseite derselben oder weiterer Flachfilterelemente 60 ist mit einem Doppelpfeil 160 bezeichnet.

Fig. 2b zeigt eine vorteilhafte Ausführungsform eines erfindungsgemäßen Filtermoduls 10' mit zwei Stirnwänden (3, 5) und einem zentrisch angeordneten Verteilerrohr 70 welches zwei Durchführungen (7, 9) in den Stirnwänden (3, 5) verbindet. Die Durchführungen (7, 9) dienen zur Zuführung und Weiterleitung eines zu filternden Rohfluids. Das Verteilerrohr 70 weist in seiner Wand eine oder mehrere Öffnungen 71 auf, durch welche das Rohfluid in radialer Richtung nach außen in den Raum zwischen den spiralförmig gewickelten Flachfilterelementen 60 strömt.

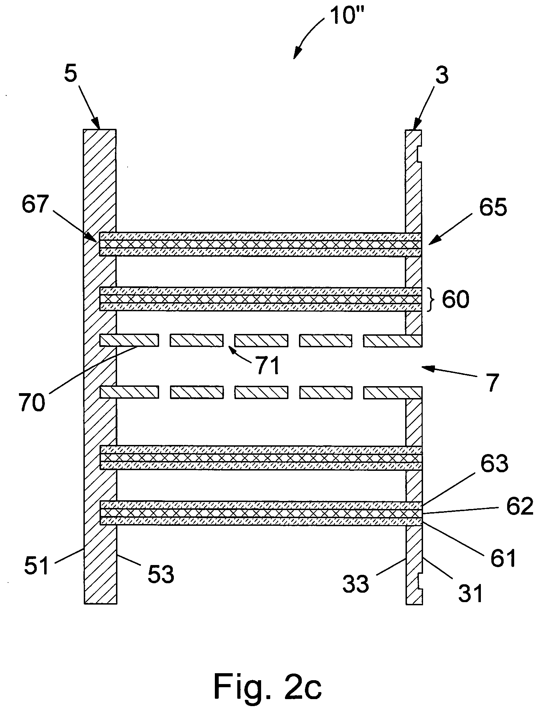

In Fig. 2c ist ein weiteres erfindungsgemäßes Filtermodul 10" dargestellt, bei dem der vierte Randbereich 67 und das optionale Verteilerrohr 70 von der zweiten Stirnwand 5 fluiddicht umschlossen sind.

Fig. 3a zeigt schematisch den Querschnitt eines erfindungsgemäßen Filtermoduls mit optionalem Verteilerrohr 70 und zwei spiralförmig gewickelten Flachfilterelementen 60 und einem zwischen den Flachfilterelementen 60 angeordneten Abstandselement 80. Das Abstandselement 80 ist vorzugsweise als grobmaschiges Gitter oder Netz aus Kunststoff ausgestaltet. Der radiale Abstand zwischen der Außenseite der spiralförmig gewickelten Flachfilterelemente 60 und der hierzu benachbarten Innenseite derselben oder weiterer Flachfilterelemente 60 ist mit einem Doppelpfeil 160 bezeichnet. Der radiale Abstand 160 beträgt 0,1 bis 20 mm, bevorzugt 0,3 bis 8 mm, und besonders bevorzugt 0,5 bis 3 mm.

Weitere Beispiele erfindungsgemäßer spiralförmiger Wickelanordnungen sind in Fig. 3b und 3c gezeigt, wobei die Bezugszeichen 60, 70 und 80 die gleiche Bedeutung wie in Fig. 3a haben. Bei der Wickelanordnung nach Fig. 3b verlaufen mehrere Flachfilterelemente 60 von Ausgangspunkten, die im wesentlichen den gleichen radialen Abstand von der Mittelachse des Filtermoduls haben, strahlenartig spiralförmig nach außen. Zwischen zwei benachbarten Flachfilterelementen 60 ist jeweils ein Abstandselement 80 angeordnet. In Fig. 3c ist eine Kombination aus einer inneren Wickelanordnung gemäss Fig. 3b und einer die innere Wickelanordnung umgebenden äußeren Wickelanordnung gemäss Fig. 3a dargestellt.

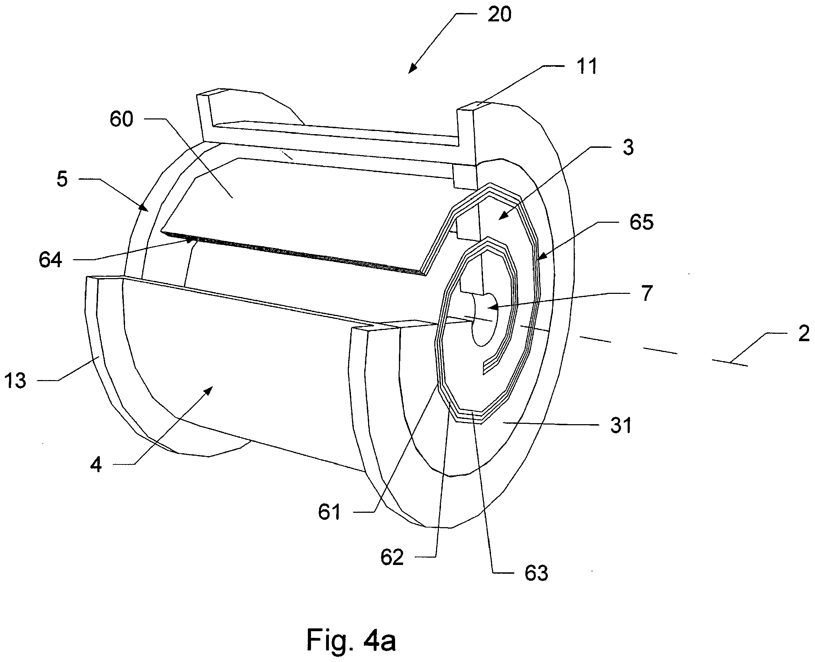

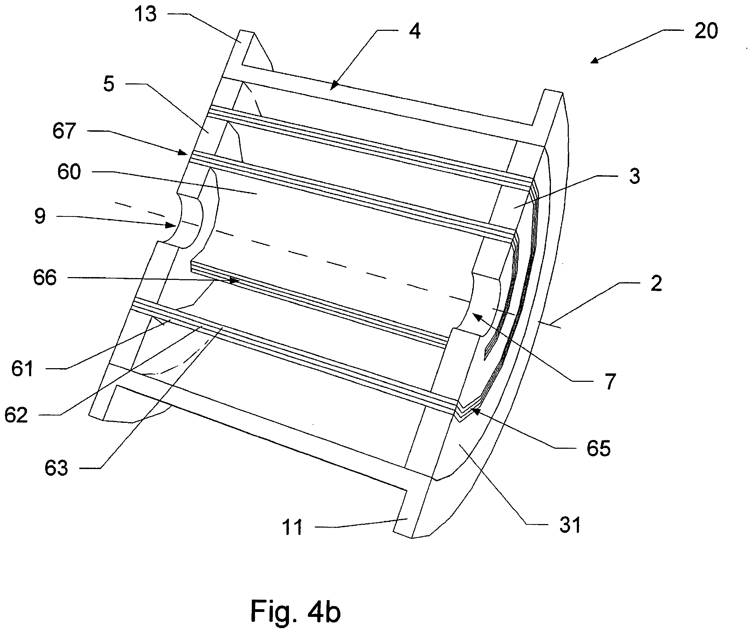

Fig. 4a und 4b zeigen perspektivische, teilweise geschnittene Ansichten eines weiteren erfindungsgemäßen Filtermoduls 20 mit zwei Stirnwänden (3, 5) und einem Gehäuse 4, wobei die Ränder der Stirnwände (3, 5) fluiddicht mit dem Gehäuse 4 verbunden sind. Zweckmäßig sind die Stirnwände (3, 5) mit zentrisch angeordneten Durchführungen (7, 9) zur Durchleitung eines zu filternden Rohfluids ausgestattet. Bevorzugt ist das Gehäuse 4 rohrförmig ausgestaltet. In einer zweckmäßigen Weiterbildung ist das Gehäuse 4 stirnseitig mit Flanschen (11, 13) ausgestattet, die es ermöglichen, das Filtermodul 20 in einfacher Weise mit weiteren Filtermodulen 20 oder anderen Komponenten eines Filtrationssystems zu verbinden. Abhängig von der Anwendung und Konfiguration der erfindungsgemäßen Filtermodule ist es zweckmäßig, eine oder beide der in Fig. 2a und 2b gezeigten Durchführungen (7, 9) des Filtermoduls 20, statt in den Stirnwänden (3, 5) in dem Gehäuse 4 anzuordnen. Das Filtermodul 20 widersteht einem Innendruck von größer 2 bar, bevorzugt größer 10 bar, und besonders bevorzugt größer 20 bar ohne mechanische Beschädigung oder Leckbildung.

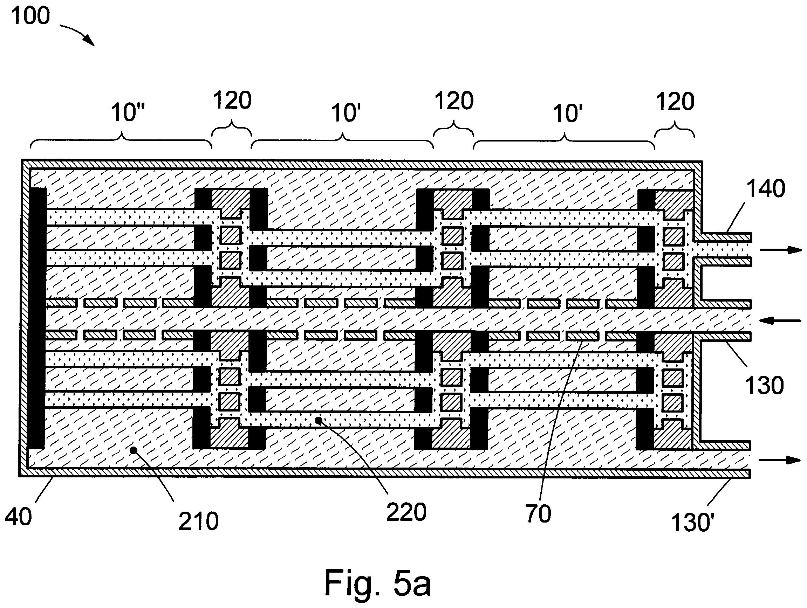

Fig. 5a zeigt beispielhaft ein erfindungsgemäßes Filtrationssystem 100, bei dem ein Filtermodul 10" mit zwei Filtermodulen 10' in Reihe in einem Tank 40 angeordnet ist. Der Tank 40 ist mit Leitungen (130, 130', 140) für die Einspeisung und Ableitung eines zu filternden Rohfluids 210 und die Abführung eines aus dem Rohfluid 210 gefilterten Permeats 220 ausgestattet. Die Einspeisung und Ableitung des Rohfluids 210 und die Abführung des Permeatfluids 220 sind in Fig. 5a mittels Strömungspfeilen angedeutet, wobei das Rohfluid 210 und das Permeatfluid 220 durch ein wellenartiges bzw. punktförmiges Schraffurmuster symbolisiert sind. Jeweils zwei der Filtermodule (10", 10') und (10', 10') sind über eine Kupplung 120 miteinander verbunden.

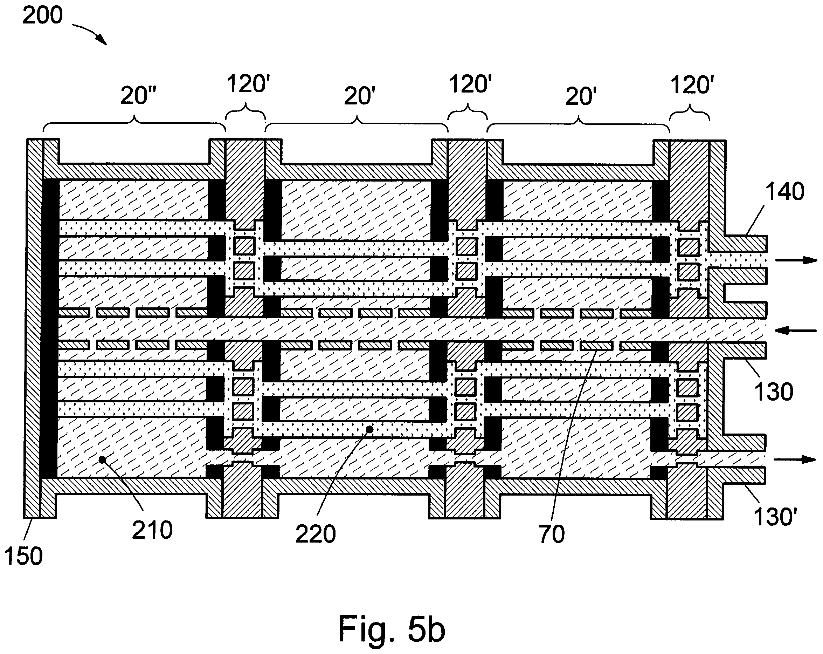

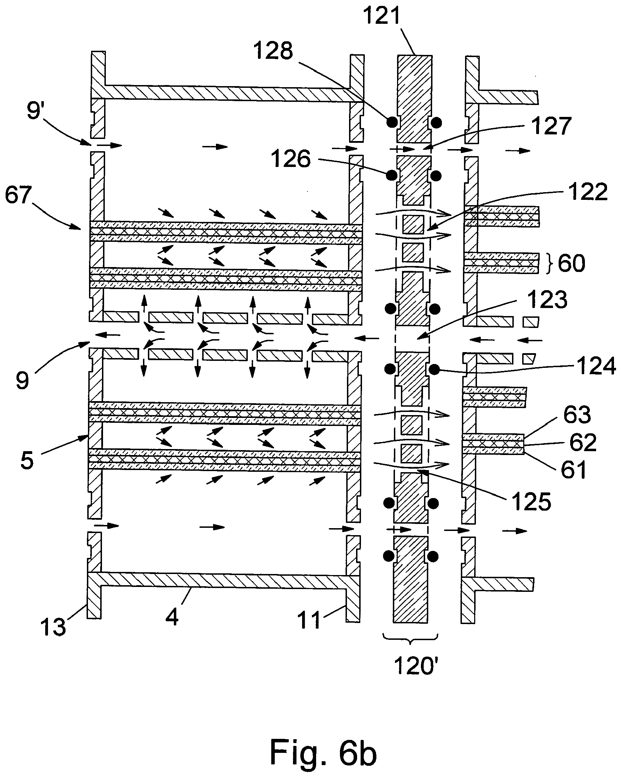

In Fig. 5b ist ein weiteres erfindungsgemäßes Filtrationssystem 200 dargestellt. Das Filtrationssytem 200 ist aus drei Filtermodulen (20", 20', 20') zusammengesetzt, wobei jeweils zwei benachbarte Filtermodule (20", 20') und (20', 20') über eine Kupplung 120' miteinander verbunden sind. Bei den Filtermodulen (20", 20') handelt es sich um erfindungsgemäße Weiterbildungen der Filtermodule 20. Zusätzlich zu einem Gehäuse 4 sind die Filtermodule (20", 20') mit einem Verteilerrohr 70 und mindestens einer Stirnwand (3, 5) ausgestattet, die neben einer zentrischen Durchführung (Bezugszeichen 7 und 9 in Fig. 2b) eine oder mehrere peripher angeordnete Durchführungen für Rohfluid 210 aufweist (Bezugszeichen 9' in Fig. 6b). An einem ersten Ende des Filtrationsystems 200 ist ein Filtermodul 20' über eine Kupplung 120' mit Leitungen (130, 130', 140) für Einspeisung und Ableitung eines Rohfluids 210 und die Abführung eines aus dem Rohfluid 210 gefilterten Permeats 220 ausgestattet. Vorzugsweise ist eine endseitige Stirnwand des Filtermodul 20" mittels eines Deckels 150 mechanisch stabilisiert.

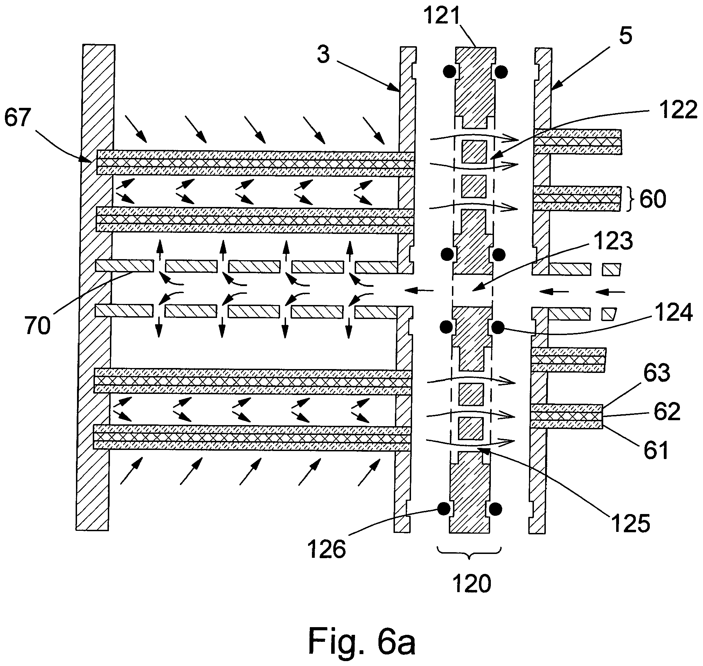

Fig. 6a zeigt in Explosionsdarstellung eine Schnittansicht der Verbindung zwischen dem Filtermodul 10" und 10' des in Fig. 5a dargestellten Filtrationssystems 100. Die Kupplung 120 umfasst einen Kupplungskörper 121, der mit peripher angeordneten Durchführungen 125 für Permeatfluid - in Fig. 6a durch offene Pfeile symbolisiert - ausgestattet ist. Optional weist der Kupplungskörper 121 Aussparungen 122 auf, die gewährleisten, dass der offene Randbereich der Flachfilterelemente 60 durch den Kupplungskörper 121 nicht partiell blockiert wird und vollständig durchströmbar ist. Die Gesamtheit der Durchführungen 125 ist auf beiden Seiten des Kupplungskörpers 121 von jeweils einer Dichtung 126 fluiddicht umschlossen. In einer alternativen Ausführungsform ist jede der Durchführungen 125 auf beiden Seiten des Kupplungskörpers jeweils von einer Dichtung 128 fluiddicht umschlossen. Die Dichtungen 126 sind vorzugsweise als herkömmliche O-Ringe aus einem elastischen Material ausgebildet. Eine im Kupplungskörper 121 zentrisch angeordnete Durchführung 123 dient zur Einspeisung und Weiterleitung von Rohfluid, welches in Fig. 6a durch geschlossene Pfeile symbolisiert ist. Die Durchführung 123 wird mittels Dichtungen 124 fluiddicht von den Durchführungen 125 getrennt.

Fig. 6b zeigt in Explosionsdarstellung eine Schnittansicht der Verbindung zwischen zwei benachbarten Filtermodulen (20', 20') des in Fig. 5b dargestellten Filtrationsystems 200.

Neben den Durchführungen 123 und 125 weist der Kupplungskörper 121 weitere Durchführungen 127 für Rohfluid (symbolisiert durch geschlossene Pfeile) auf. Die Gesamtheit der Durchführungen 127 ist mittels Dichtungen 126 und 128 gegenüber den Durchführungen 125 und der Außenseite des Filtermoduls 20' fluiddicht isoliert. In einer alternativen Ausführungsform ist jede der Durchführungen 127 auf beiden Seiten des Kupplungskörpers jeweils von einer Dichtung 128 fluiddicht umschlossen. Neben einer zentrischen Durchführung 9 (s. auch Bezugszeichen 7 und 9 in Fig. 2b) weisen die Stirnwände der Filtermodule 20' eine oder mehrere peripher angeordnete Durchführungen 9' für Rohfluid auf.

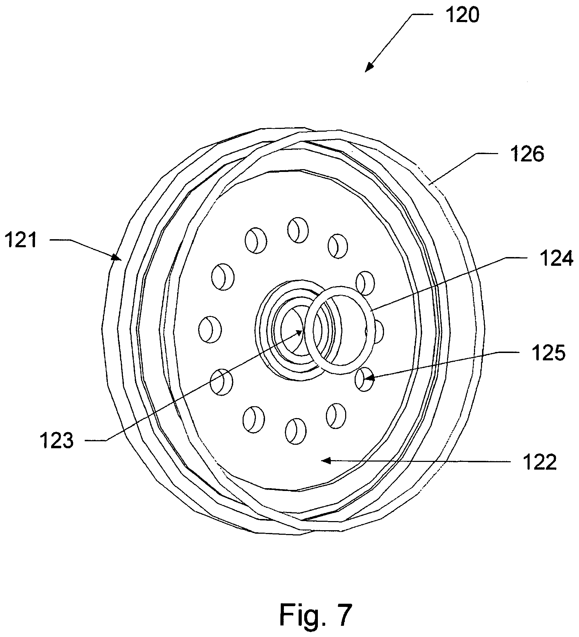

Fig. 7 schließlich zeigt in perspektivischer Explosionsdarstellung eine Kupplung 120, die sich für den Einsatz in dem in Fig. 5a dargestellten Filtrationssystemen 100 eignet und die einen Kupplungskörper mit 121 mit Durchführungen (123, 125) für Roh- und Permeatfluid, sowie eine oder zwei Dichtungen 124 und eine oder zwei Dichtungen 126 umfasst.

## Patentansprüche

1. Filtermodul (1, 10, 10', 10", 20, 20', 20"), umfassend ein oder mehrere um eine Achse (2) spiralförmig gewickelte Flachfilterelemente (60), eine erste Stirnwand (3) und eine zweite Stirnwand (5), wobei
jedes Flachfilterelement (60) zwei Filtermembranen (61, 63) und eine zwischen den Filtermembranen (61, 63) angeordnete Drainagelage (62) umfasst;
jedes Flachfilterelement (60) erste und zweite Randbereiche (64, 66) aufweist, die im wesentlichen in Richtung der Achse (2) verlaufen und fluiddicht versiegelt sind;
jedes Flachfilterelement (60) einen dritten Randbereich (65) aufweist, der mit der ersten Stirnwand (3) verbunden ist;
der dritte Randbereich (65) an einer Außenseite (31) der ersten Stirnwand (3) offen ist; der dritte Randbereich (65) gegenüber einer Innenseite (33) der ersten Stirnwand (3) fluiddicht versiegelt ist;
jedes Flachfilterelement (60) einen vierten Randbereich (67) aufweist, der gegenüber der Innenseite (33) fluiddicht versiegelt ist;
das Filtermodul (10, 10', 10", 20, 20', 20") eine zweite Stirnwand (5) aufweist;
der vierte Randbereich (67) mit der zweiten Stirnwand (5) verbunden ist;
der Randbereich (67) gegenüber einer Innenseite (53) der zweiten Stirnwand (5) fluiddicht versiegelt ist;
der Randbereich (67) von der zweiten Stirnwand (5) fluiddicht umschlossen oder an einer Außenseite (51) der zweiten Stirnwand (5) offen ist; **dadurch gekennzeichnet, dass** erste Stirnwand (3) und optional die zweite Stirnwand (5) zentrisch angeordnete Durchführungen (7, 9) aufweisen; und
das Filtermodul (10, 10', 10", 20, 20', 20") ein Verteilerrohr (70) umfasst, wobei das Verteilerrohr (70) mit der Durchführung (7) und optional (9) verbunden ist und in seiner Wand eine oder mehrere Öffnungen (71) aufweist.

2. Filtermodul (1, 10, 10', 10", 20, 20', 20") nach Anspruch 1, **dadurch gekennzeichnet, dass** die Filtermembranen (61, 63) mit der Drainagelage (62) flächig haftend verbunden, vorzugsweise laminiert sind.

3. Filtermodul (1, 10, 10', 10", 20, 20', 20") nach Anspruch 1, **dadurch gekennzeichnet, dass** zwischen der Außenseite der spiralförmig gewickelten Flachfilterelemente (60) und der hierzu benachbarten Innenseite derselben oder weiterer Flachfilterelemente (60) flächenhaft ausgebildete, durchströmbare Abstandselemente (80) angeordnet sind.

4. Filtermodul (1, 10, 10', 10", 20, 20', 20") nach Anspruch 1, **dadurch gekennzeichnet, dass** es eine aktive Filtrationsfläche von größer 50 m², bevorzugt größer 250 m², und besonders bevorzugt von größer 1000 m² aufweist.

5. Filtermodul (1, 10, 10', 10", 20, 20', 20") nach Anspruch 1, **dadurch gekennzeichnet, dass** die Flachfilterelemente (60) in Richtung der Achse (2) eine Länge von 0,1 bis 6,0 m, bevorzugt von 0,4 bis 4,0 m, und besonders bevorzugt von 0,6 bis 2,5 m aufweisen.

6. Filtermodul (1, 10, 10', 10", 20, 20', 20") nach Anspruch 1, **dadurch gekennzeichnet, dass** der mit den spiralförmig gewickelten Flachfilterelementen (60) ausgefüllte Raumbereich, bezogen auf die Achse (2) eine radiale Abmessung von 0,05 bis 1,5 m, bevorzugt von 0,1 bis 1,25 m, und besonders bevorzugt von 0,2 bis 0,8 m hat.

7. Filtermodul (1, 10, 10', 10", 20, 20', 20") nach Anspruch 1, **dadurch gekennzeichnet, dass** der radiale Abstand (160) zwischen der Außenseite der spiralförmig gewickelten Flachfilterelemente (60) und der hierzu benachbarten Innenseite derselben oder weiterer Flachfilterelemente (60) 0,1 bis 20 mm, bevorzugt 0,3 bis 8 mm, und besonders bevorzugt 0,5 bis 3 mm beträgt.

8. Filtermodul (20, 20', 20") nach Anspruch 1, **dadurch gekennzeichnet, dass** es ein Gehäuse (4) umfasst und dass das Gehäuse (4) fluiddicht mit der ersten und gegebenenfalls der zweiten Stirnwand (3, 5) verbunden ist.

9. Filtermodul (20, 20', 20") nach Anspruch 8, **dadurch gekennzeichnet, dass** das Gehäuse (4) rohrförmig ausgestaltet ist.

10. Filtrationssystem (100, 200) zur Filtration eines Permeatfluids (220) aus einem Rohfluid (210), umfassend
Filtermodule (1, 10, 10', 10", 20, 20', 20") nach einem oder mehreren der Ansprüche 1 bis 9;
Kupplungen (120, 120') zur Verbindung der Filtermodule (1, 10, 10', 10", 20, 20', 20"); Leitungen (130, 130', 140) für Rohfluid (210) und Permeatfluid (220); wobei jede Kupplung (120, 120') einen Kupplungskörper (121) mit Durchführungen (125) für Permeatfluid (220) sowie Dichtungen (126) umfasst und die Dichtungen (126) die Durchführungen (125) fluiddicht umschließen; und
jede Kupplung (120, 120') eine zentrisch im Kupplungskörper (121) angeordnete Durchführung (123) für Rohfluid (210) sowie Dichtungen (124) aufweist, wobei die Dichtungen (124) die Durchführung (123) fluiddicht umschließen und gegenüber den Durchführungen (125) fluiddicht versiegeln.

11. Filtrationssystem (100, 200) nach Anspruch 10, **dadurch gekennzeichnet, dass** jede Kupplung (120, 120') peripher im Kupplungskörper (121) angeordnete Durchführungen (127) für Rohfluid (210) sowie Dichtungen (128) aufweist, wobei die Dichtungen (128) die Durchführungen (127) fluiddicht umschließen.

## Claims

1. Filter module (1, 10, 10', 10", 20, 20', 20") comprising one or more flat filter elements (60) wound spirally about an axis (2), a first end wall (3) and a second end wall (5), wherein
each flat filter element (60) comprises two filter membranes (61, 63) and a drainage layer (62) arranged between the filter membranes (61, 63);
each flat filter element (60) has first and second edge regions (64, 66) which run substantially in the direction of the axis (2) and are sealed in a fluid-tight manner;
each flat filter element (60) has a third edge region (65) which is connected to the first end wall (3);
the third edge region (65) is open at an outer side (31) of the first end wall (3);
the third edge region (65) is sealed in a fluid-tight manner in relation to an inner side (33) of the first end wall (3);
each flat filter element (60) has a fourth edge region (67) which is sealed in a fluid-tight manner in relation to the inner side (33);
the filter module (10, 10' 10", 20, 20', 20") has a second end wall (5);
the fourth edge region (67) is connected to the second end wall (5);
the edge region (67) is sealed in a fluid-tight manner in relation to an inner side (53) of the second end wall (5);
the edge region (67) is enclosed in a fluid-tight manner by the second end wall (5) or is open on an outer side (51) of the second end wall (5); **characterized in that** first end wall (3) and optionally the second end wall (5) have centrally arranged ducts (7, 9); and
the filter module (10, 10', 10", 20, 20', 20") comprises a distributor pipe (70), the distributor pipe (70) being connected to the duct (7) and optionally (9) and having one or more openings (71) in its wall.

2. Filter module (1, 10, 10', 10", 20, 20', 20") according to Claim 1, **characterized in that** the filter membranes (61, 63) are area-bonded to, preferably laminated with, the drainage layer (62).

3. Filter module (1, 10, 10', 10", 20, 20', 20") according to Claim 1, **characterized in that** spacer elements (80) which are of sheet-like design through which the flow can pass are arranged between the outer side of the spirally wound flat filter elements (60) and the inner side of the same or
further flat filter elements (60), said inner side being adjacent to said outer side.

4. Filter module (1, 10, 10', 10", 20, 20', 20") according to Claim 1, **characterized in that** it has an active filtration surface of greater than 50 m², preferably greater than 250 m², and particularly preferably of greater than 1000 m².

5. Filter module (1, 10, 10', 10", 20, 20', 20") according to Claim 1, **characterized in that** the flat filter elements (60) have a length of 0.1 to 6.0 m, preferably of 0.4 to 4.0 m, and particularly preferably of 0.6 to 2.5 m in the direction of the axis (2).

6. Filter module (1, 10, 10', 10", 20, 20', 20") according to Claim 1, **characterized in that** the space region filled with the spirally wound flat filter elements (60) has a radial dimension of 0.05 to 1.5 m, preferably of 0.1 to 1.25 m, and particularly preferably of 0.2 to 0.8 m with respect to the axis (2).

7. Filter module (1, 10, 10', 10", 20, 20', 20") according to Claim 1, **characterized in that** the radial distance (160) between the outer side of the spirally wound flat filter elements (60) and the inner side of the same or further flat filter elements (60), said inner side being adjacent to said outer side, is 0.1 to 20 mm, preferably 0.3 to 8 mm, and particularly preferably 0.5 to 3 mm.

8. Filter module (20, 20', 20") according to Claim 1, **characterized in that** said filter module comprises a housing (4), and **in that** the housing (4) is connected in a fluid-tight manner to the first and optionally to the second end wall (3, 5).

9. Filter module (20, 20', 20") according to Claim 8, **characterized in that** the housing (4) is of tubular configuration.

10. Filtration system (100, 200) for filtering a permeate fluid (220) out of an untreated fluid (210), comprising
filter modules (1, 10, 10', 10", 20, 20', 20") according to one or more of Claims 1 to 9;
couplings (120, 120') for connecting the filter modules (1, 10, 10', 10", 20, 20', 20");
lines (130, 130', 140) for untreated fluid (210) and permeate fluid (220); wherein
each coupling (120, 120') comprises a coupling body (121) with ducts (125) for permeate fluid (220) and seals (126) and the seals (126) enclose the ducts (125) in a fluid-tight manner; and
each coupling (120, 120') has a duct (123) which is arranged centrally in the coupling body (121) and is intended for untreated fluid (210), and seals (124), the seals (124) enclosing the duct (123) in a fluid-tight manner and sealing said duct in a fluid-tight manner in relation to the ducts (125).

11. Filtration system (100, 200) according to Claim 10, **characterized in that** each coupling (120, 120') has ducts (127) which are arranged peripherally in the coupling body (121) and are intended for untreated fluid (210), and seals (128), the seals (128) enclosing the ducts (127) in a fluid-tight manner.

## Revendications

1. Module filtrant (1, 10, 10', 10", 20, 20', 20") comprenant un ou plusieurs éléments filtrants plats (60) enroulés autour d'un axe (2) de manière à présenter une forme de spirale, une première paroi frontale (3) et une deuxième paroi frontale (5), dans lequel
chaque élément filtrant plat (60) comprend deux membranes filtrantes (61, 63) et une couche de drainage (62) disposée entre les membranes filtrantes (61, 63) ;
chaque élément filtrant plat (60) présente des première et deuxième zones de bord (64, 66), qui s'étendent sensiblement en direction de l'axe (2) et qui sont scellées de manière étanche aux fluides ;
chaque élément filtrant plat (60) présente une troisième zone de bord (65), qui est reliée à la première paroi frontale (3) ;
la troisième zone de bord (65) est ouverte au niveau d'un côté extérieur (31) de la première paroi latérale (3) ;
la troisième zone de bord (65) est scellée de manière étanche aux fluides par rapport à un côté intérieur (33) de la première paroi frontale (3) ;
chaque élément filtrant plat (60) présente une quatrième zone de bord (67), qui est scellée de manière étanche aux fluides par rapport au côté intérieur (33) ;
le module filtrant (10, 10', 10", 20, 20', 20") présente une deuxième paroi frontale (5) ;
la quatrième zone de bord (67) est reliée à la deuxième paroi frontale (5) ;
la zone de bord (67) est scellée de manière étanche aux fluides par rapport à un côté intérieur (53) de la deuxième paroi frontale (5) ;
la zone de bord (67) est entourée de manière étanche aux fluides par la deuxième paroi frontale (5) ou est ouverte au niveau d'un côté extérieur (51) de la deuxième paroi frontale (5) ;
**caractérisé en ce que** la première paroi frontale (3) et, en option, la deuxième paroi frontale (5) présentent des passages (7, 9) disposés au centre ; et
le module filtrant (10, 10', 10", 20, 20', 20") comprend un tube de distribution (70), dans lequel le tube de distribution (70) est relié au passage (7) et, en option, (9) et présente, dans sa paroi, une ou plusieurs ouvertures (71).

2. Module filtrant (1, 10, 10', 10", 20, 20', 20") selon la revendication 1, **caractérisé en ce que** les membranes filtrantes (61, 63) sont reliées de manière adhésive à plat à la couche de drainage (62), de préférence stratifiées.

3. Module filtrant (1, 10, 10', 10", 20, 20', 20") selon la revendication 1, **caractérisé en ce que** des éléments d'espacement (80) réalisés à plat, pouvant être traversés par un flux sont disposés entre le côté extérieur des éléments filtrants plats (60) enroulés de manière à présenter une forme de spirale et le côté intérieur adjacent audit côté extérieur du même élément filtrant plat ou d'autres éléments filtrants plats (60).

4. Module filtrant (1, 10, 10', 10", 20, 20', 20") selon la revendication 1, **caractérisé en ce qu'**il présente une surface de filtration active supérieure à 50 m², de manière préférée supérieure à 250 m², et de manière particulièrement préférée supérieure à 1 000 m².

5. Module filtrant (1, 10, 10', 10", 20, 20', 20") selon la revendication 1, **caractérisé en ce que** les éléments filtrants plats (60) présentent en direction de l'axe (2) une longueur allant de 0,1 à 6,0 m, de manière préférée allant de 0,4 à 4,0 m, et de manière particulièrement préférée allant de 0,6 à 2,5 m.

6. Module filtrant (1, 10, 10', 10", 20, 20', 20") selon la revendication 1, **caractérisé en ce que** la zone spatiale remplie des éléments filtrants plats (60) enroulés de manière à présenter une forme de spirale, présente, par rapport à l'axe (2), une dimension radiale allant de 0,05 à 1,5 m, de manière préférée allant de 0,1 à 1,25 m, et de manière particulièrement préférée allant de 0,2 à 0,8 m.

7. Module filtrant (1, 10, 10', 10", 20, 20', 20") selon la revendication 1, **caractérisé en ce que** la distance radiale (160) entre le côté extérieur des éléments filtrants plats (60) enroulés de manière à présenter une forme de spirale et le côté intérieur, adjacent audit côté extérieur, du même élément filtrant plat ou d'autres éléments filtrants plats (60) présente une valeur allant de 0,1 à 20 mm, de manière préférée de 0,3 à 8 mm, et de manière particulièrement préférée allant de 0,5 à 3 mm.

8. Module filtrant (20, 20', 20") selon la revendication 1, **caractérisé en ce qu'**il comprend un boîtier (4), et que le boîtier (4) est relié de manière étanche aux fluides à la première et éventuellement à la deuxième paroi frontale (3, 5).

9. Module filtrant (20, 20', 20") selon la revendication 8, **caractérisé en ce que** le boîtier (4) est configuré de manière à présenter une forme tubulaire.

10. Système de filtration (100, 200) servant à la filtration d'un fluide de perméat (220) a partir d'un fluide brut (210), comprenant
des modules filtrants (1, 10, 10', 10", 20, 20', 20") selon l'une quelconque des revendications 1 à 9 ;
des systèmes d'accouplement (120, 120') servant à relier les modules filtrants (1, 10, 10', 10", 20, 20', 20") ;
des conduits (130, 130', 140) pour du fluide brut (210) et du fluide de perméat (220) ; dans lequel
chaque système d'accouplement (120, 120') comprend un corps d'accouplement (121) pourvu de passages (125) pour du fluide de perméat (220) ainsi que des joints d'étanchéité (126) et les joints d'étanchéité (126) renferment de manière étanche aux fluides les passages (125) ; et
chaque système d'accouplement (120, 120') présente un passage (123), disposé au centre dans le corps d'accouplement (121), pour du fluide brut (210) ainsi que des joints d'étanchéité (124), dans lequel les joints d'étanchéité (124) renferment de manière étanche aux fluides le passage (123) et le scellent de manière étanche aux fluides par rapport aux passages (125).

11. Système de filtration (100, 200) selon la revendication 10, **caractérisé en ce que** chaque système d'accouplement (120, 120') présente des passages (127) disposés en périphérie dans le corps d'accouplement (121) pour du fluide brut (210) ainsi que des joints d'étanchéité (128), dans lequel les joints d'étanchéité (128) renferment de manière étanche aux fluides les passages (127).
